(19) Europäisches Patentamt
European Patent Office
Office européen des brevets

(11) **EP 1 855 492 B1**

(12) **EUROPEAN PATENT SPECIFICATION**

(45) Date of publication and mention
of the grant of the patent:
**04.06.2008 Bulletin 2008/23**

(51) Int Cl.:
***H04Q 7/32*** *(2006.01)*

(21) Application number: **06009844.9**

(22) Date of filing: **12.05.2006**

(54) **Method, apparatus and system for reusing resources in a telecommunication network using repeaters.**

Verfahren, Vorrichtung und System zur Wiederverwendung von Ressourcen in einem Telekommunikationsnetzwerk mit Verstärkern

Méthode, appareil, et système pour la réutilisation des ressources dans un réseau de télécommunications à répéteurs

(84) Designated Contracting States:
**DE GB**

(43) Date of publication of application:
**14.11.2007 Bulletin 2007/46**

(73) Proprietor: **NTT DoCoMo, Inc.**
**Chiyoda-ku**
**Tokyo, 100-6150 (JP)**

(72) Inventor: **Herdin, Markus, Dr.**
**81373 München (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**EP-A- 1 501 216**  **WO-A-03/013094**
**DE-A1- 19 648 178**  **US-B1- 6 370 384**

**Description**

The present invention relates to a method and to a transmitter for communicating data between a plurality of receivers and a transmitter in a wireless communication system, more particularly to a resource reuse and assignment scheme for infrastructure decode-and-forward (DF) relaying networks.

Recently, multi-hop networks have gained a lot of interest in the mobile radio research community. It is widely accepted that they will become essential for beyond 3G mobile radio systems due to the range problem that appears there. As higher carrier frequencies or center frequencies can be envisaged for future mobile radio communication systems, where the expected center frequencies range up to 5-10 GHz and with bandwidth requirements of up to 100 MHz that can be foreseen, a significantly increased pathloss and noise power level has to be expected, which translates into a significantly reduced area a base station can cover, cf. Werner Mohr, Rainer Lüder, and Karl-Heinz Möhrmann, "Data Rate Estimates, Range Calculations and Spectrum Demand for New Elements of Systems Beyond IMT-2000," in 5th International Symposium on Wireless Personal Multimedia Communications, October 2002, vol. 1, pages 37-46.

In order to circumvent the introduction of a denser grid of base stations (BS), the basic idea is to introduce relay stations (RS), which forward data packets to a mobile station (MS) that is out of reach of the base station. Such relay stations can be realized utilizing additional dedicated infrastructure relay stations having fixed power supplies, or they could be built into other mobile stations.

Two main concepts of relaying were identified in the past: Amplify-and-Forward (AF) and Decode-and-Forward (DF). While AF has the advantage of being transparent to modulation and coding since a sampled version of the received signal is stored and retransmitted by the relay station without performing any decoding, DF allows for a separate adaptation to both links and avoids also the effect of noise enhancement since DF means that the relay station decodes and re-encodes the signal.

A large number of publications on different aspects of multi-hop networks already exist. Different variants of Amplify-and-Forward and Decode-and-Forward were analyzed and compared in J. Nicholas Laneman, David N.C. Tse, and Gregory W. Wornell, "Cooperative Diversity in Wireless Networks: Efficient Protocols and Outage Behavior," IEEE Transactions on Information Theory, accepted for publication. User cooperation schemes that aim on gaining diversity were proposed and analyzed in Andrew Sendonaris, Elza Erkip, and Behnaam Aazhang, "User Cooperation Diversity, Part I and II," IEEE Transactions on Communications, vol. 15, pages 1927-1948, November 2003. The multi-antenna case for i.i.d. (independent identically distributed) Rayleigh fading scenarios and perfect channel knowledge at the transmit side was analyzed by Olga Munoz, Josep Vidal, and Adrián Agustin, "A Game Theoretic Approach for Cooperative MIMO Schemes with Cellular Reuse of the Relay Slot," in Proc. IEEE International Conference on Acoustics, Speech and Signal Processing, ICASSP, Montreal, May 2004. The multi-antenna case when having correlated MIMO channels and different channel knowledge states available at the relay station was analyzed in Markus Herdin, "MIMO Amplify-and-Forward Relaying in correlated MIMO channels," in Proc. International Conference on Information, Communications and Signal Processing, Bangkok, Thailand, December 2005, pages 796-800.

One disadvantage of relaying is the need for double resources compared to direct transmission. This is due to the fact that a relay station cannot transmit and receive simultaneously; hence a time-division operation is necessary. A promising concept to avoid this drawback is to reuse resources within a cell. A frequency hopping scheme for resource reuse in cellular relay networks was proposed by H. Hu, H. Yanikomeroglu, D.D. Falconer, and S. Periyalwar, "Range extension without capacity penalty in cellular networks with digital fixed relays," in Proc. IEEE Global Telecommunications Conference, Texas, Dallas, November 2004, and O. Mubarek, H. Yanikomeroglu, and S. Periyalwar, "Dynamic frequency hopping in cellular fixed relay networks," in Proc. IEEE Vehicular Technology Conference, Sweden, Stockholm, May 2005. They divided each cell into 7 sub-cells and considered up to 7-fold reuse of frequencies within a single cell.

Olga Munoz, Josep Vidal, and Adrián Agustin, "A Game Theoretic Approach for Cooperative MIMO Schemes with Cellular Reuse of the Relay Slot," in Proc. IEEE International Conference on Acoustics, Speech and Signal Processing, ICASSP, Montreal, May 2004 analyzed distributed space time linear dispersion codes in a multi-hop scenario, where the relay station time slot is reused by several relay stations (reuse in relay slot). Another multi-hop scenario is to use the base station time slot, which was described in Markus Herdin and Timo Unger, "Resource Reuse in Infrastructure Amplify-and-Forward Relaying Networks," in submitted to VTC 2006 Fall.

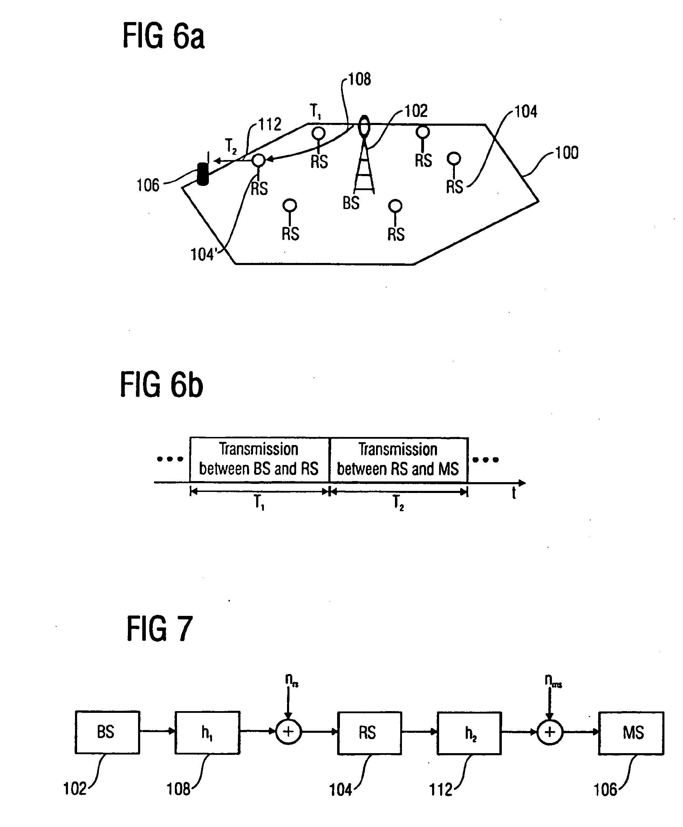

Fig. 6a shows an example for one cell 100 of a multi-hop system. The cell 100 comprises a transmitter 102, e.g. a base station (BS), and a plurality of relay stations (RS) 104. In the example of Fig. 6a only one receiver 106, e.g. a mobile station (MS), is present in the cell. Naturally, a plurality of mobile stations could be present in the cell; however, for clarity reason only one mobile station 106 is shown. The transmitter 102 transmits a radio signal via an antenna over a first radio channel 108 to a specific relay station 104' during a time interval $T_1$. The relay station 104' receives the signal from the transmitter 102 and forwards the signal over a second radio channel 112 to the receiver 106 during a second time interval $T_2$. As can be seen from Fig 6b, the transmission between the transmitter 102 and the receiver 106 is subdivided into two the time intervals $T_1$ and $T_2$. During the communication interval $T_1$ the data is transmitted from the transmitter 102 to the relay station 104', and during the communication interval $T_2$ this data is redirected from the relay station 104' to the receiver 106. Considering the Decode-and-Forward relaying protocol, during the first communication interval $T_1$ the transmitter 102 transmits data to the relay station 104', which decodes and stores the received data. In the second communication interval $T_2$ the relay station 104' re-encodes the data and transmits the encoded data to the receiver 106. Since the receiver 106 is out of range of the transmitter 102, Fig. 6 demonstrates how the relay station 104' extends the range of the transmitter 102.

Fig. 7 shows a block diagram representing the communication channel between the transmitter 102 and the receiver 106 as shown in Fig. 6a using the relay station 104'. The first hop channel 108 between the transmitter 102 and the relay station 104' can be modeled as follows:

$$y_{rs} = h_1 x_{bs} + n_{rs} + i_{rs}, \qquad (1)$$

with

$y_{rs}$     the received signal at the relay station,
$h_1$     the channel coefficient of the first hop channel 108,
$n_{rs}$     the additive white Gaussian noise at the relay station, and
$i_{rs}$     the interference experienced at the relay station 104'.

The second hop channel 112 between the relay station 104' and the receiver 106 is modeled as follows:

$$y_{ms} = h_2 x_{rs} + n_{ms} + i_{ms}, \qquad (2)$$

with

$y_{ms}$     the received signal at the receiver 106,
$h_2$     the channel coefficient of the second hop channel 112,
$n_{ms}$     the additive white Gaussian noise at the receiver 106, and
$i_{ms}$     the interference experienced at the receiver 106.

The interference at the relay station and the receiver is solely calculated based on the pathloss of the first and the second hop channels and the transmit power of an inter-ferer, respectively. Using the signal-to-interference-plus-noise ratio (SINR) at the relay station

$$SINR_{rs} = \frac{\sigma_{bs}^2 |h_1|^2}{\left(\sigma_{n,rs}^2 + \sigma_{i,rs}^2\right)}, \qquad (3)$$

with

$\sigma_{bs}^2$     the transmit power at the transmitter,

$\sigma_{n,rs}^2$     the received noise power at the relay station, and

$\sigma_{i,rs}^2$     the received interference power at the relay station, and the SINR at the receiver

$$SINR_{ms} = \frac{\sigma_{rs}^2 |h_2|^2}{\left(\sigma_{n,ms}^2 + \sigma_{i,ms}^2\right)}, \qquad (4)$$

with

$\sigma_{rs}^2$     the transmit power at the relay station,

$\sigma_{n,ms}^2$     the received noise power at the receiver; and

$\sigma^2_{i,ms}$ the received interference power at the receiver, the capacity of the first and second hop channels 108, 112 can be calculated as follows:

$$C_{1,2} = \log_2(1 + SINR_{ms/rs}), \qquad (5)$$

respectively. The capacity of a channel is the amount of discrete information that can be reliably transmitted over that channel and is typically measured in bits/s/Hz. The overall capacity received by using the above described decode-and-forward protocol is given by the minimum of the first and second hop channels' capacity:

$$C = 1/2 \cdot \min(C_1, C_2). \qquad (6)$$

The factor ½ is due to need for two communication intervals to get the information from the transmitter to the receiver.

A major drawback of communication networks using relay stations as shown in Fig. 6 is that for overcoming the above shortcomings due to reduced channel capacity there is the necessity for doubling the resources since a relay station cannot receive and transmit simultaneously. Therefore, the resource management in a conventional communication network using relay stations has to double the capacity in order to at least compensate this disadvantage over direct transmission from the transmitter to the receivers. This can, for example, be achieved by cooperative transmission schemes where spatial diversity can be exploited at a receiver by using distributed antennas belonging to different relay stations so has to have a virtual antenna array resulting in multiple independent radio channels to the receiver. A capacity increase in a communication network using relay stations can further be achieved by using high gain antennas at the relay station for the link to the base station, or an adequate network planning for relay station positions.

The European patent application EP 1 501 216 A1 describes an access method and UMTS repeater system with spectral exchange between UMTS wave frequencies comprising one or several UMTS cellular base stations, one or several near repeaters, one or several remote repeaters, UMTS cellular remote terminals. The cellular station or stations provide UMTS cellular communications services to the near terminals inside the coverage area thereof and will be connected via cable to one or several near repeaters. The near repeaters communicate with one or several remote repeaters in another of the UMTS bands, via radio. Each remote repeater communicates with a near repeater in one of the UMTS bands, with the remote terminals in another of the UMTS bands. The remote terminals communicate with the base station through the repeater system.

As can be seen, all these conventional approaches are disadvantageous as same require additional resources or extensive modifications of the network or its components.

It is the object of the present invention to provide a method and a transmitter providing for an improved resource reuse in multi-hop wireless communication networks.

This object is achieved by a method according to claim 1, by a transmitter according to claim 14, and by a system according to claim 18.

In accordance with a further aspect, the present invention provides a computer program for carrying out the inventive method.

In accordance with yet a further aspect, the present invention provides a wireless communication system comprising the inventive transmitter.

The present invention provides a method for communicating data between a plurality of receivers and a transmitter in a wireless communication system, the wireless communication system comprising a plurality of relay stations, wherein at least one of the plurality of relay stations has assigned thereto at least one receiver, each relay station relaying data between the transmitter and the assigned receiver, the method comprising:

during subsequent communication intervals, communicating data between the transmitter and different groups of relay stations, wherein each group of relay stations comprises at least one relay station.

Further, the present invention provides a transmitter for a wireless communication system, wherein data is communicated in the wireless communication system between a plurality of receivers and the transmitter, the wireless communication system comprising a plurality of relay stations, wherein at least one of the plurality of relay stations has assigned thereto at least one receiver, each relay station relaying data between the transmitter and the assigned receiver, wherein the transmitter is adapted to communicate data between the transmitter and different groups of relay stations during subsequent communication intervals, wherein each group of relay stations comprises at least one relay station.

In accordance with the present invention a novel and improved approach for reuse of resources in a wireless communication system is provided. In accordance with a basic approach, the present invention allows the servicing of a plurality of groups of relay stations (each group including at least one relay station) by a single base station or transmitter in subsequent, separate time periods or time phases. Preferably, N groups of relay stations exist being serviced during N/2 subsequent time periods. In accordance with a preferred embodiment, the actual reuse of the resource, e.g. the frequency bands, occurs between two respective groups of relay stations. With other words, during a first communication interval data is communicated between the transmitter and a first group of relay stations and between a second group of relay stations and their assigned receivers, while during a subsequent communication interval data is communicated between the transmitter and the second group of relay stations and between the first group of relay stations and their assigned receivers.

In accordance with one embodiment, the inventive approach comprises a further step for assigning the resources. First, it is to be determined whether a mobile station (receiver) is to be assigned to the base station (transmitter) or to one of the relay stations. Preferably, an "interference aware" approach is chosen which is based on the knowledge of the average pathloss between the base station to the respective mobile stations and which is based on the knowledge of the average pathloss between all relay stations and all the mobile stations. The assignment of the mobile station to either a relay station or to the base stations is determined on the basis of the maximum signal-to-interference-plus-noise ratio (SINR). To explain this approach in further detail, it is assumed that the cell is full, i.e., the base station transmits in each time slot and in each frequency band. Thus, always an interference associated with the base station will be generated at the mobile station. Whether a mobile station is assigned to a relay station or to the base station is determined on the basis of whether the signal-to-noise ratio SNR when the mobile station is serviced directly by the base station (communicates with the base station), i.e., is assigned to the base station and therefore experiences no interference, is greater than the signal-to-interference-plus-noise ratio (SINR) when the mobile station is serviced by the best relay station (the relay station having the lowest pathloss to the mobile station). It is noted that the assumption of a full cell was only made for explanatory purposes; however, the present invention is not limited to such a scenario.

In accordance with a further embodiment, each group of relay stations has assigned there to only a number $N_f$ of mobile stations, $N_f$ being the number of available frequency bands. Again, a fully loaded cell is assumed and in this case $N_f$ equals $N_{ms}/N_{gr}$, with $N_{gr}$ being the number of groups of relay stations, and $N_{ms}$ being the number of mobile stations. Considering the exemplary case of two groups of relay stations (simplest case) the cell is fully loaded when only $N_{ms}/2$ frequency bands are available. To fulfill the above condition, i.e., $N_f$ mobile stations per relay station group at maximum, those mobile stations will be rearranged from one group to another group which have the best connection to a relay station in the other group and which are higher in number.

In accordance with yet another preferred embodiment, the inventive approach for resource assignment has a second step during which the actual frequency bands are associated to the respective connections, i.e. frequency bands are assigned to MS-BS connections as well as to MS-RS-BS connections. For the two partial connections MS-RS and RS-BS the same frequency bands are used. Preferably, the frequency bands are assigned to the MS-BS connections first, wherein the mobile stations being assigned directly to the base station are also separated into different groups, so that during the first communication interval, data is also communicated between the transmitter and a first group of receivers, and during the second communication interval data is also communicated between the transmitter and a second group of receivers. In case of a fully loaded cell the groups of receivers assigned directly to the base station have the same size. In case the cell is not fully loaded, this is not necessary.

Thus, in accordance with a preferred embodiment, a novel resource reuse and assignment scheme for infrastructure Decode-and-Forward (DF) relaying networks is provided which allows overcoming the capacity penalty of multi-hop networks by reusing resources within a single cell. In order to limit the created intra-cell interference, a simple but effective resource assignment scheme that relies only on average link quality measurements. The resource reuse scheme shows large capacity gains over direct transmission without the need for complicated cooperative transmission schemes. Large capacity gains for decode-and-forward relaying compared to direct transmission are achieved by reusing resources in the cell. The reuse in the base station slot (RBS) scheme proves to allow an efficient reuse of resources. Furthermore, resource assignment is important to limit the intra-cell interference that is created by reusing resources. The interference-aware resource assignment gives significant gains compared to the case of taking interference not into account, in particular for users that generally suffer from low capacity. Naturally, the present invention is not limited to such an embodiment, i.e., the relay station could for example also use the Amplify-and-Forward protocol.

In the following, preferred embodiments of the present invention will be described with respect to the accompanying drawings, in which

Fig. 1    shows a schematic view of a multi-hop network in accordance with the present invention;

Fig. 2    shows the principle of resource reuse in the base station time slot for more than two groups of relay stations;

Fig. 3     shows a principle flow chart of a resource assignment procedure according to an embodiment of the present invention;

Fig. 4     shows a considered simulation scenario with eight relay stations and exemplary mobile station positions;

Fig. 5a    shows the cumulative density function (CDF) of mean capacity values of all mobile stations;

Fig. 5b    shows a zoom into the CDF of mean capacity values of all mobile stations depicted in Fig. 5a;

Fig. 6     shows a schematic view of a single cell multi-hop network using decode-and-forward relaying (Fig. 6a) and schematically the transmissions during two time intervals (Fig. 6b); and

Fig. 7     shows a block diagram of a multi-hop channel between a base station and a mobile station.

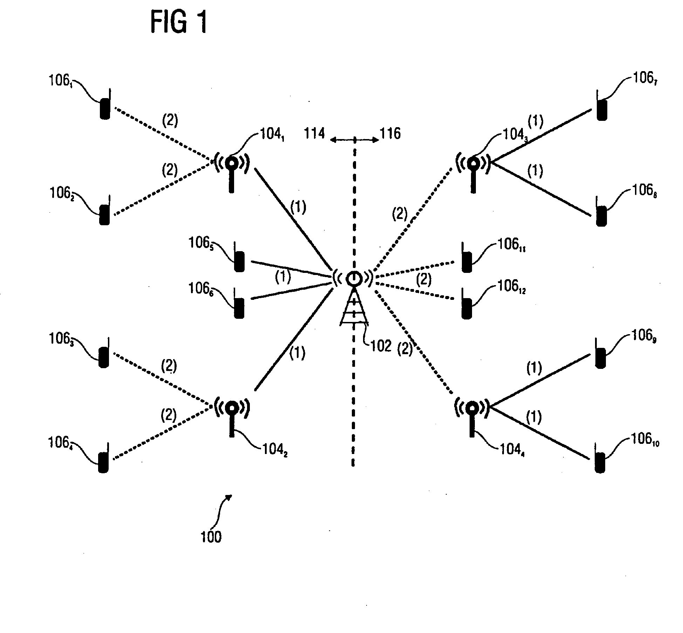

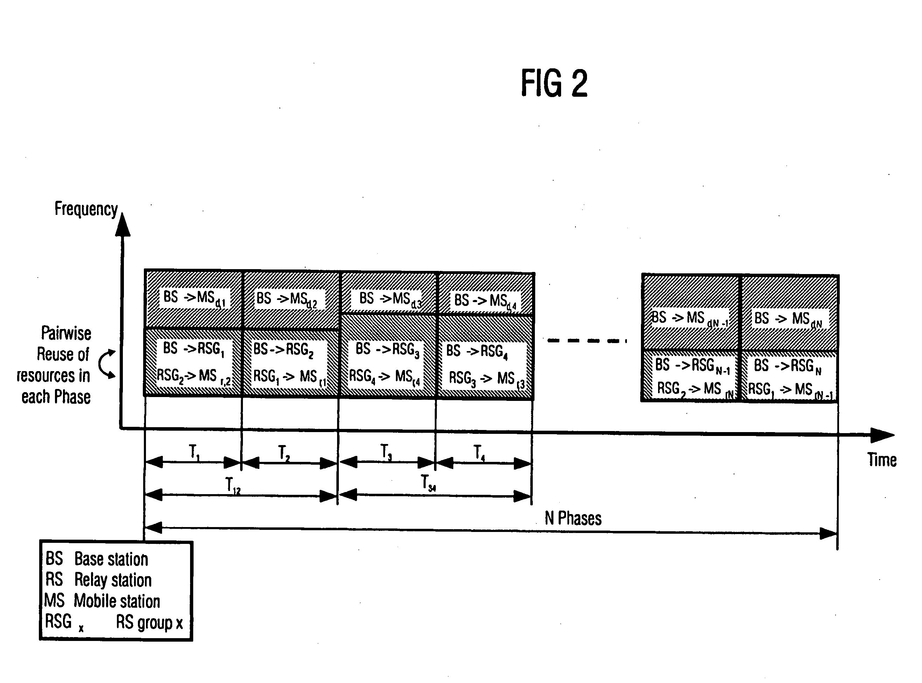

Fig. 1 shows an exemplary cell 100 of a wireless communication system for describing the inventive approach resource reuse in the base station time slot according to a preferred embodiment of the present invention. The depicted embodiment considers a downlink in the single cell scenario with one base station 102, four infrastructure decode-and-forward relay stations $104_1$, $104_2$, $104_3$ und 1044 and 12 mobile stations $106_1$ to $106_{12}$. While the above scenario assumes that each of the relay stations has assigned thereto one or more mobile stations, it is noted that the present invention is not limited to such a scenario or embodiment. Rather, other situations exist, in which one or more of the relay stations in the communications system do not have assigned thereto a mobile station.
The relay stations are separated into a first group 114 comprising relay stations $104_1$ and $104_2$ and a second group 116 comprising relay stations $104_3$ and $104_4$. Furthermore, in the depicted embodiment, six mobile stations $106_1$ to $106_6$ are associated with the first group 114, and the remaining six mobile stations $106_7$ to $106_{12}$ are associated with the second group 116. As can be seen, mobile stations $106_1$ and $106_2$ are assigned to the relay station $104_1$ of the first group 114, mobile stations $106_3$ and $106_4$ are assigned to the relay station $104_2$ of the first group 114, and mobile stations $106_5$ and $106_6$ are assigned directly to the base station 102. In a similar manner, mobile stations $106_7$ and $106_8$ are assigned to the relay station $104_3$ of the second group 116, mobile stations $106_9$ and $106_{10}$ are assigned to the relay station $104_4$ of the second group 116, and mobile stations $106_{11}$ and $106_{12}$ are assigned directly to the base station 102.
These two groups 114, 116 are served in subsequent communication intervals $T_1$ and $T_2$ by the base station 102, i.e. during the first communication interval $T_1$, the base station 102 transmits data packets to the first group 114 of relay stations $104_1$ and $104_2$ using frequencies selected from first frequency bands, while the second group 116 of relay stations $104_3$ and $104_4$ retransmits data packets received in the previous communication interval to their assigned mobile stations $106_7$ to $106_{10}$ also using frequencies selected from the first frequency bands. During the second communication interval $T_2$ the roles are exchanged, i.e., the base station 102 transmits data packets to the second group 116 of relay stations $104_3$ and $104_4$ using the frequencies selected from the first frequency bands, while the first group 114 of relay stations $104_1$ and $104_2$ retransmits data packets received in the previous communication interval to their assigned mobile stations $106_1$ to $106_4$ also using the frequencies selected from the first frequency bands. Also, during the second communication interval $T_2$ the base station 102 transmits data packets to the mobile stations $106_{11}$ and $106_{12}$ being directly assigned to the base station.
In the preferred embodiment of the present invention depicted in Fig. 1, the mobile stations $106_5$, $106_6$, $106_{11}$, $106_{12}$ which are served by the base station 102 directly, are also considered in addition to relaying. As mentioned before, these mobile stations $106_5$, $106_6$, $106_{11}$, $106_{12}$ are also separated into two groups. During the first communication interval $T_1$, the base station 102 transmits data packets to the first group of directly assigned mobile stations $106_5$ and $106_6$ using frequencies selected from the second frequency bands. In the second communication interval $T_2$, again, the roles are exchanged, i.e. the base station 102 transmits data packets to the second group of directly assigned mobile stations $106_{11}$ and $106_{12}$ using the frequencies selected from the second frequency bands. The mobile stations $106_5$, $106_6$, $106_{11}$, $106_{12}$ served by the base station 102 directly do not face any interference.
The above approach results in interference at the mobile stations and also at the relay stations. The mobile stations that receive retransmitted data packets from an assigned relay station face interference from the simultaneous transmission from the base station to the other group of relay stations. The relay stations of one group that are currently served by the base station 102 are interfered by the retransmission of the relay stations of the other group. This makes an interference-aware resource assignment algorithm necessary in order to minimize interference and to maximize capacity.
The resource reuse factor of the inventive method according to the embodiment shown in Fig. 1 is two, since the relay stations are subdivided into two groups 114 and 116 and are served by the base station 102 in the two subsequent communication intervals $T_1$ and $T_2$. The resource efficiency factor is one.
The preferred embodiment of the inventive method according to Fig. 1 can simply be extended to a general case of having an higher number $N_g$ of groups of relay stations, where $N_g > 2$. This general case of reuse in the base station time slot for more than two groups of relay stations is depicted in Fig. 2.

In accordance with a further preferred embodiment, an even number of groups of relay stations is used. In this case of more than two groups of relay stations, always two groups, i.e. one pair of groups of relay stations mutually reuses their resources in subsequent communication intervals, while all other pairs of groups of relay stations are inactive. As shown in Fig. 2, during the first communication interval $T_1$, the BS is communicating data to the first group $RSG_1$ of relay stations using first frequency bands, while a second group $RSG_2$ of relay stations is communicating data to their assigned mobile stations $MS_{r,2}$ also using the first frequency bands. Further, during this first communication interval $T_1$, the BS is communicating data to a first group of directly assigned mobile stations $MS_{d,1}$ using second frequency bands. During the second communication interval $T_2$ of communication phase $T_{12}$ dedicated to the first two relay station groups $RSG_1$ and $RSG_2$, the BS is communicating data to the second group $RSG_2$ of relay stations using the first frequency bands, while the first group $RSG_1$ of relay stations is communicating data to their assigned mobile stations $MS_{r,1}$ also using the first frequency bands. Further, during the second communication interval $T_2$, the BS is communicating data to its assigned mobile stations $MS_{d,2}$ using the second frequency bands.

The description above can be likewise adapted for the communication intervals $T_3$ to $T_N$ for the groups of relay stations $RSG_3$ to $RSG_N$.

As can be seen from Fig. 2, the frequency bands assigned to the users that are served directly by the base station are disjoint from the frequency bands assigned to the users that are served via relay stations. However, the frequency bands assigned to the users directly served by the base station and to the users served via relay stations are pairwise reused by the respective groups in each communication interval. That means that the frequency bands that are used during the first communication interval $T_1$ by the mobile stations $MS_{d,1}$ directly assigned to the BS, are also used by the second group of mobile stations $MS_{d,2}$ directly assigned to the BS in the second communication interval $T_2$. The same holds for the frequency bands assigned to the mobile stations that are assigned to a pair of relay station groups. As can be seen in Fig. 2, the same frequency bands are used in the first communication interval $T_1$ for communicating between the BS and the first relay station group $RSG_1$ and for communication between the second relay station group $RSG_2$ and their assigned mobile stations $MS_{r,2}$ and in the second communication interval $T_2$ for communicating data between the BS and the second relay station group $RSG_2$ and the communication of the first relay station group $RSG_1$ to their assigned mobile stations $MS_{r,1}$.

From Fig. 2 the aforementioned interference situation becomes even clearer. Since the frequency bands used by the mobile stations directly assigned to the base station are orthogonal to the frequency bands used for the mobile stations assigned to the relay stations, the mobile stations directly assigned to the base stations are not interfered by the communication between the base station and the relay stations or the communication between the relay stations and their assigned mobile stations. On the other hand, the mobile stations assigned to the second group of relay stations $RSG_2$ is interfered by the communication between the base station and the first group of relay stations $RSG_1$, since the same frequency band is used. The same holds for the mobile stations assigned to the first relay station group $RSG_1$, which are interfered by the communication between the base station and the second group of relay stations $RSG_2$, since the same frequency band is used.

The separation of the relay stations into more than two groups allows for a better spatial separation of relay stations and therefore lower interference, but as becomes obvious from Fig. 2 this also increases the overall delay, since each mobile station has to wait until its relay station group becomes active.

In order to have an efficient reuse of resources, it is advantageous in a preferred embodiment of the present invention to assign mobile stations to relay stations and to the base station such that the same number of mobile stations is served in each communication interval, respectively. This includes relayed and also direct transmission, dependent on what yields a higher capacity. This ensures that resources can always be reused.

In the above described case of two groups of relay stations and a fully loaded cell, one half of the mobile stations will be served during the first communication interval and the other half during the second communication interval, either directly or via a relay station. If $N_u$ denotes the number of users and $N_g$ the number of groups, then the overall available bandwidth is separated into $N_f = N_u/N_g$ equal frequency bands dedicated to $N_f$ users belonging to each group, respectively.

In accordance with a further preferred embodiment, one aspect in resource reuse schemes is the resource assignment. A sensible management of the available resources (time/frequency slots) allows for controlled interference and optimum performance according to specific criteria. One necessity for resource management is to have information about the link qualities available at a central controller. For preferred embodiments of the present invention, it is assumed to have information available at the base station about the average pathloss $L_{bsms}(i)$ between the base station and each mobile station i ($i=1...N_u$), about the average pathloss $L_{rsms}(j,i)$ between each relay station j and each mobile station I, and about the average pathloss $L_{rsrs}(j,k)$ between all relay stations j,k.

Together with the information about the transmit power of each node, it is therefore possible for the base station to estimate the average received power at a mobile station from each transmitting node and therefore the SINR (Signal-to-Interference-plus-Noise Ratio) when one node acts as a serving node and the other active nodes are seen as interferers.

This is in particular true when power control is not considered. Note, however, that the transmit power of different relay stations might differ, because it is assumed that the transmit power of each relay station per assigned mobile station is fixed. This means that a relay station retransmits with maximum power, only if it has assigned $N_f$ mobile stations and therefore $N_f$ frequency bands.

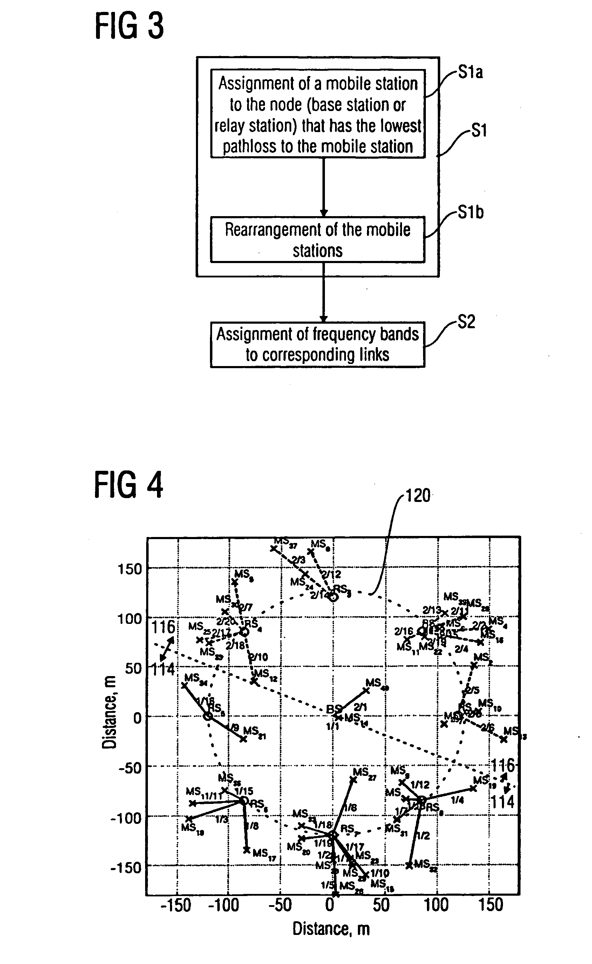

As shown in the flow chart of Fig. 3 resources are assigned in two steps according to a preferred embodiment: in a first step S1 mobile stations are assigned to either the base station or to relay stations. This assignment influences the amount of interference that the mobile station will face. In a following second step S2 frequency bands are assigned to the corresponding links. When regarding a BS-RS-MS link, it is assumed that on the first and the second hop channels, the same frequency band is used when transmitting data from the base station via a relay station to a mobile station.

In accordance with an embodiment of the present invention, for step S1 a pathloss-only based BS/RS assignment of the mobile stations is considered. For the pathloss-only based assignment the interference the base station created for mobile stations which are served by relay stations is not considered. It is decided only based on the average pathloss, which node shall serve a mobile station.

In a first sub-step S1a for the pathloss-only based assignment a mobile station is assigned successively to that node (base station or relay station) that has the lowest pathloss to the mobile station. This means, a mobile station i is assigned to the base station if

$$L_{bsms}(i) < \min_{j}\{L_{rsms}(j,i)\} \qquad (7)$$

whereas it is assigned to a relay station m

$$m = \arg\min_{j}\{L_{rsms}(j,i)\} \qquad (8)$$

if the condition (7) does not hold.

In a second sub-step S1b for the pathloss-only based assignment, the assignments of the mobile stations according to the first sub-step S1a are rearranged such that the given restriction, i.e. an even number of mobile stations assigned to the base station and the same number of mobile stations assigned to the respective relay station groups, are fulfilled. If the number of mobile stations assigned to the base station in sub-step S1a is odd, that particular mobile station is reassigned to the base station which has the lowest pathloss to the base station and which was previously assigned to a relay station. Then, the mobile stations assigned to the relay stations are considered. As long as a first group of relay stations has less mobile stations assigned to it than a second group, mobile stations from the second group are reassigned to the first group. For that purpose a mobile station from the second group that has the lowest pathloss to one of the relay stations of the first group is taken from the second group. This ensures that rearranging the assignments has a small effect on the capacity this mobile station gets.

According to another preferred embodiment of the present invention, the assignment of the mobile stations to either the base station or to a specific relay station is based on an interference-aware BS/RS assignment. In case of the interference-aware assignment of mobile stations, an interference generated from the base station is considered in the assignment process. This means that the mobile station i is assigned to the base station in case the SNR (Signal-to-Noise Ratio) experienced at the mobile station based on useful signals sent by the base station is larger than a SINR (Signal-to-Interference-plus-Noise Ratio) experienced at the mobile station based on useful signals sent by any of the plurality of relay stations and also based on interfering signals sent by the base station at the same time and in the same frequency band as the useful signals. This means that mobile station i is assigned to the base station if

$$\frac{P_{t,bs}}{L_{bsms}(i)N_f P_n} > \max_{j} \frac{\dfrac{P_{t,rs}}{L_{rsms}(j,i)}}{N_f P_n + \dfrac{P_{t,bs}}{L_{bsms}(i)}} \qquad (9)$$

is fulfilled, where

$P_{t,bs}$     total transmit power of the transmitter,
$P_{t,rs}$     total transmit power of a relay station,

$N_f$      number of available frequency bands,

$P_n$      noise power received within each of the available frequency bands,

$L_{bsms}$      average pathloss between a base station and a mobile station, and

$L_{rsms}$      average pathloss between a relay station and a mobile station.

If this condition does not hold, the mobile station is assigned to relay station m

$$m = \operatorname*{argmin}_{j}\{L_{rsms}(j,i)\}. \qquad\qquad (10)$$

After having done this, in the second sub-step of the interference-aware assignment the mobile stations are rearranged such that the given restrictions, that is an even number of mobile stations assigned to the base station and the same number of mobile stations assigned to the respective relay station group are fulfilled. This is done in the same way as for the pathloss-only based assignment described above.

In the second step S2 of the resource assignment procedure according to the inventive method, frequency bands are assigned to the BS-RS-MS links. Note that for the data packets that are transmitted to a specific mobile station, the same frequency band is used on the first and the second hop channels. $N_d$ users that are served directly by a base station get assigned always first $N_d/N_g$ frequency bands, i.e. $N_d/2$ frequency bands in the case of two groups. For the remaining ($N_u$-$N_d$) users that are served via relay stations and get assigned ($N_u$-$N_d$) /$N_g$ frequency bands, a frequency assignment algorithm of step S2 determines the interference that the corresponding relay stations create mutually.

The simplest possible frequency assignment algorithm is to randomly assign frequency bands to the different BS-RS-MS links. This means, it might happen that closely spaced neighboring relay stations that belong to different relay station groups use the same frequency band, hence create a large amount of interference to each other.

According to a preferred embodiment of the present invention, the frequency assignment to the BS-RS-MS links is done interference-aware in step S2 of the resource assignment flowchart shown in Fig. 3. In case of the interference-aware frequency assignment, the mutual interference between relay stations is taken into account during the assignment process. According to a preferred embodiment of the inventive method, the following approach is used: two relay stations from two different groups of relay stations with minimum pathloss between them that still need to get assigned a frequency band for serving a mobile station are chosen. The two relay stations, and the corresponding mobile stations, get assigned different frequency bands. The assigned frequency bands are selected out of a set of available frequency bands for each group of relay stations. Only frequency bands are considered for each relay station of a group that is not already used by another relay station of the respective group. This assignment process is repeated until all relay stations and therefore also all assigned mobile stations have been assigned the necessary frequency bands. By this, the interference between relay stations of different groups is kept as small as possible.

Fig. 4 shows a simulation scenario considering the downlink in a single cell scenario with one BS, eight infrastructure Decode-and-Forward relay stations $RS_{1-8}$ and forty mobile stations $MS_{1-40}$. The relay stations $RS_{1-8}$ are located on a circle 120 with a distance of 120 m around the BS. The mobile stations $MS_{1-40}$ are uniformly distributed on an area with maximum distance of 180 m from the BS.

The BS is considered to be equipped with a single omnidirectional antenna with 0 dB gain. The same assumption is made for each of the mobile stations $MS_{1-40}$. Only the relay stations $RS_{1-8}$ have two antennas, respectively, one directional antenna for communicating with the base station with 5 dB gain and one for communicating with the mobile stations with 0 dB antenna gain. RS-to-RS links, however, are also modeled with 0 dB antenna gain due to the fact that the directional antenna at the relay station is directed towards the base station but not towards other relay stations. All links are modeled as non line-of-sight (NLOS), i.e. Rayleigh fading links with a pathloss coefficient of n = 4. The small-scale Rayleigh fading is simulated but not any large-scale fading.

For the simulation 100 realizations of random user distributions are considered and for each of the 100 realizations the mean channel capacity that is achieved by each of the 40 users by averaging over 100 fading realizations of the respective channel is calculated. An exemplary scenario is shown in Fig. 4. The assignments of the mobile stations $MS_{1-40}$ to the relay stations $RS_{1-8}$ or the BS are symbolized by lines. The two solid lines originating from the BS show the assignments of mobile stations $MS_{14}$ and $MS_{40}$ to the BS, the solid lines originating from the RS indicate the assignment of mobile stations to the first group 114 of relay stations $RS_{5-8}$ and the dashed lines originating from the RS indicate the assignment of mobile stations to the second group 116 of relay stations $RS_{1-4}$. This means, $RS_5$ to $RS_8$ belong to the first group of relay stations, and $RS_1$ to $RS_4$ belong to the second group of relay stations. Close to each assignment line, the time slot and the frequency band is given within each mobile station is served. E.g. 1/4 means that the time slot 1 and frequency band 4 is used for this mobile station. In particular, 1/1 in Fig. 4 means that time slot 1 and frequency band 1 is used for mobile station $MS_{14}$ and 2/1 means that time slot 2 and frequency band 1 is used for mobile station $MS_{40}$. Both $MS_{14}$ and $MS_{40}$ are assigned to the BS, however, they are served within different time slots.

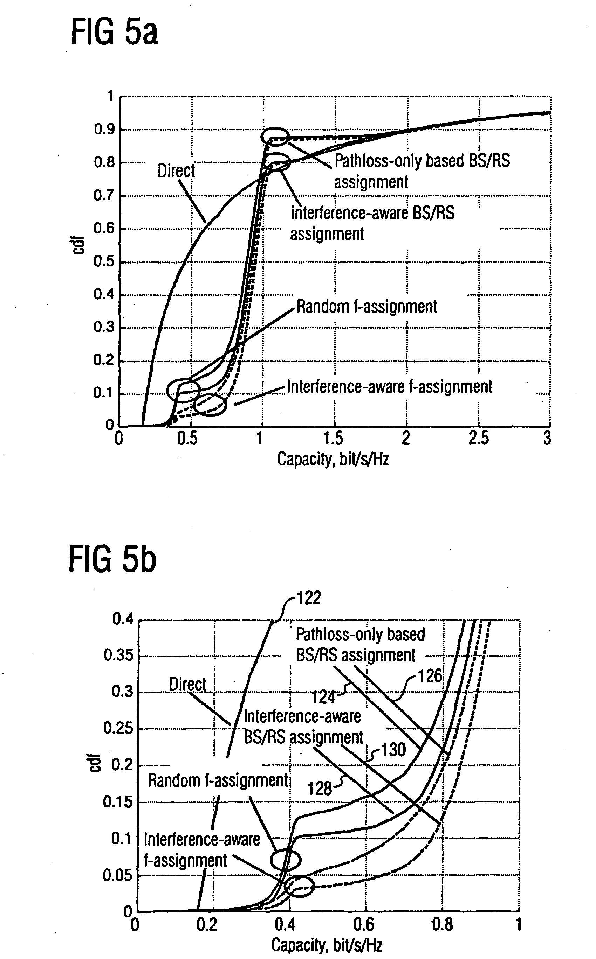

In general a transmitter can send at a data rate that cannot be supported by all channel states, i.e. fading realizations. In these poor channel states the receiver declares an outage and the transmitted data is lost. Hence, each transmission rate has an outage probability assigned therewith and the channel capacity is measured relative to outage probability. In this sense, as a result of the described simulation, the cdf (cumulative density function) of the mean capacity values achieved by each of the 40 users by averaging over 100 fading realizations of the channel is shown in Fig. 5a. A zoomed version of the cdf is shown in Fig. 5b.

Fig. 5a and Fig. 5b present five different cdf's obtained by simulating five different resource reuse and assignment schemes. A first curve 122 represents direct transmission from the BS to the MSs, i.e. no relaying. A second curve 124 represents relaying with pathloss-only based BS/RS assignment and random frequency assignment. A third curve 126 shows the performance of relaying with pathloss-only based BS/RS assignment and interference-aware frequency assignment. By a fourth curve 128 the result for relaying with interference-aware BS/RS assignment and random frequency assignment is depicted. Finally, a fifth curve 130 shows the result for relaying with interference-aware BS/RS assignment and interference-aware frequency assignment.

The result depicted in Fig. 5a and Fig. 5b is that relaying with reuse of resources allows for large overall capacity gains compared to direct transmission from the base station. Particularly, users that would achieve only a rather small capacity, gain a lot from relaying. This is indicated in Fig. 5b by the double arrow. Whereas in the case of direct transmission 510 an outage probability of 15% relates to an average capacity of 0.21 bits/s/Hz in the simulation scenario depicted in Fig. 4, 15% outage probability relate to 0.82 bits/s/Hz in the case of relaying with interference-aware BS/RS assignment and interference-aware frequency assignment. In other words: in the case of direct transmission 85% of the users will experience an average capacity of 0.21 bits/s/Hz whereas 85% of the users will experience an average capacity of 0.82 bits/s/Hz in the case of relaying with interference-aware BS/RS assignment and interference-aware frequency assignment. This is a capacity increase by a factor close to four.

Users that would anyway be served sufficiently well by the base station in the case of direct transmission are also served well by the base station in the relaying case. This is the reason why the cdf for direct transmission and the cdf for relaying (with optional direct transmission between base station and mobile stations) are lying on top of each other in the high capacity region of Fig. 5a.

A more detailed look at the results for relaying reveals significant performance differences for the various considered resource assignment schemes. As can be seen in Fig. 5a and Fig. 5b, random frequency assignment performs much worse than interference-aware frequency assignment. As Fig. 5b shows, in the 10% cdf region, a capacity gain of up to nearly 100% can be achieved by relaying with interference-aware BS/RS assignment and interference-aware frequency assignment compared to relaying with pathloss-only BS/RS assignment using random frequency assignment. The clear result of this observation is that taking interference into account for resource assignment according to the present invention results in large capacity gains for users that generally have low capacity.

A significant gain of relaying with interference-aware BS/RS assignment and interference-aware frequency assignment over relaying with pathloss-only BS/RS assignment using random frequency assignment can also be seen when looking at the 80% to 90% cdf levels in Fig. 5a. These users have a relatively good connection to both base station and relay station, which means that for BS/RS assignment, it is important to consider the interference from the base station.

Referring to Fig. 5a the cdf of direct transmission from the BS to the MSs is crossed by the curves representing relaying with resource reuse and assignment in the 75% cdf region. In the cdf region below that intersection the curves representing relaying with resource reuse and assignment lie right from the curve for direct transmission from the BS to the MSs indicating a capacity gain for relaying with resource reuse over direct transmission. The area defined by the cdf of direct transmission and one of the cdf's representing relaying with resource reuse and assignment can be seen as a measure for the capacity gain for users below the 75% cdf region. In a small cdf region above the intersection the curves representing relaying with resource reuse lie left from the curve for direct transmission. This indicates a slight loss of capacity for relaying with resource reuse compared to direct transmission for users in this high capacity region, whereas this loss is negligible for relaying with interference-aware BS/RS assignment. Again, the area defined by the cdf of direct transmission and one of the cdf's representing relaying with resource reuse and assignment can be seen as a measure for the capacity loss for users above the 75% cdf region. However, in total, a large capacity gain prevails since the area defining the capacity gain below the 75% cdf region is larger then the small area defining the capacity loss above the 75% cdf region. Hence, in total around 75% of the overall users will face a higher capacity such increasing the overall system capacity.

According to present invention, large capacity gains for decode-and-forward relaying compared to direct transmission are possible if resources are reused within a cell. The reuse-in-the-base-station-slot scheme according to the present invention proves to allow an efficient reuse of resources. Furthermore, the present invention shows that resource assignment is important in order to limit the intra-cell interference that is created by reusing resources. When comparing different resource assignment schemes, it can be shown that an interference-aware resource assignment according to the present invention gives significant games compared to the case of taking interference not into account, in particular for users that generally suffer from low capacity.

In further embodiments of the present invention also communication resources like spreading sequences required for CDMA (Code Division Multiple Access) based wireless communications systems or time slots required for TDMA (Time Division Multiple Access) based wireless communications systems could be assigned to the BS-RS-MS links in addition or instead of different frequency bands.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

**Claims**

1. A method for communicating data between a plurality of receivers ($106_1$-$106_{12}$; MS) and a transmitter (102; BS) in a wireless communication system, the wireless communication system comprising a plurality of relay stations ($104_1$-$104_4$; RS), wherein at least one of the plurality of relay stations ($104_1$-$104_4$; RS) has assigned thereto at least one receiver ($106_1$-$106_{12}$; MS), each relay station ($104_1$-$104_4$; RS) relaying data between the transmitter (102; BS) and the assigned receiver ($106_1$-$106_{12}$; MS), **characterized by**
during subsequent communication intervals ($T_1$, $T_2$; $T_3$, $T_4$), communicating data between the transmitter (102; BS) and different groups (114, 116) of relay stations ($104_1$-$104_4$; RS) , wherein each group (114, 116) of relay stations ($104_1$-$104_4$; RS) comprises at least one relay station ($104_1$-$104_4$; RS), wherein
during a first communication interval ($T_1$)

   communicating data between the transmitter (102) and a first group (114) of relay stations ($104_1$-$104_2$) using a first frequency band, and
   communicating data between a second group (116) of relay stations ($104_3$-$104_4$) and their assigned receivers ($106_7$-$106_{10}$) using the first frequency band; and

   during a second communication interval ($T_2$)

   communicating data between the transmitter (102) and the second group (116) of relay stations ($104_3$-$104_4$) using the first frequency band, and
   communicating data between the first group (114) of relay stations ($104_1$-$104_2$) and their assigned receivers ($106_7$-$106_{10}$) using the first frequency band.

2. The method of claim 1, further comprising:

   associating at least one receiver ($106_1$-$106_{12}$; MS) to one of the plurality of relay stations ($104_1$-$104_4$; RS); and
   assigning a communication resource to a communication link between the transmitter (102; BS), a relay station ($104_1$-$104_4$; RS) and a receiver ($106_1$-$106_{12}$; MS) assigned to the relay station ($104_1$-$104_4$; RS).

3. The method of claim 2, wherein the at least one receiver ($106_1$-$106_{12}$; MS) is assigned to the relay station ($104_1$-$104_4$; RS) having the lowest pathloss to the at least one receiver ($106_1$-$106_{12}$; MS).

4. The method of one of claims 1 to 3, further comprising:

   associating a plurality of the receivers ($106_5$, $106_6$, $106_{11}$, $106_{12}$; MS) with the transmitter (102; BS), wherein during the subsequent communication intervals $T_1$, $T_2$), data is further communicated between the transmitter (102) and different groups of receivers ($106_5$, $106_6$, $106_{11}$, $106_{12}$) assigned to the transmitter (102; BS) using a second frequency band, wherein each group of receivers comprises at least one receiver.

5. The method of claim 4, wherein
during the first communication interval ($T_1$), data is communicated between the transmitter (102) and a first group of receivers ($106_5$, $106_6$) using the second frequency band, and

during the second communication interval ($T_2$) , data is communicated between the transmitter (102; BS) and a second group of receivers ($106_{11}$, $106_{12}$) using the second frequency band.

6. The method of claim 4 or 5, wherein a receiver ($106_5$, $106_6$, $106_{11}$, $106_{12}$; MS) is assigned to the transmitter (102; BS) based on an average pathloss on the radio channels between the relay stations ($104_1$-$104_4$; RS) and the receiver ($106_1$-$106_{12}$; MS) and an average pathloss on the radio channel between the receiver ($106_5$, $106_6$, $106_{11}$, $106_{12}$; MS) and the transmitter (102; BS).

7. The method of claim 6, wherein a receiver ($106_5$, $106_6$, $106_{11}$, $106_{12}$; MS) is assigned to the transmitter (102; BS) when the pathloss on the radio channel between the transmitter (102; BS) and the receiver ($106_5$, $106_6$, $106_{11}$, $106_{12}$; MS) is the smallest pathloss when compared to the pathlosses on the radio channels between the relay stations ($104_1$-$104_4$; RS) and the receiver ($106_5$, $106_6$, $106_{11}$, $106_{12}$; MS).

8. The method of claim 7, wherein a receiver ($106_5$, $106_6$, $106_{11}$, $106_{12}$; MS) is assigned to the transmitter (102; BS) when the signal-to-noise ratio of the radio channel between the receiver ($106_5$, $106_6$, $106_{11}$, $106_{12}$; MS) and the transmitter (102; BS) is larger than the signal-to-noise ratio on the radio channel between the transmitter (102; BS), a relay station ($104_1$-$104_4$; RS) and the receiver ($106_5$, $106_6$, $106_{11}$, $106_{12}$; MS).

9. The method of claim 8, wherein a receiver ($106_5$, $106_6$, $106_{11}$, $106_{12}$; MS) is assigned to the transmitter (102; BS) when

$$\frac{P_{t,bs}}{L_{bsms}(i) N_f P_n} > \max_j \frac{\dfrac{P_{t,rs}}{L_{rsms}(j,i)}}{N_f P_n + \dfrac{P_{t,bs}}{L_{bsms}(i)}}$$

with

$P_{t,bs}$ total transmit power of the transmitter (102; BS),
$P_{t,rs}$ total transmit power of a relay station ($104_1$-$104_4$; RS),
$N_f$ number of available frequency bands,
Pn noise power received within each of the available frequency bands,
$L_{bsms}$ average pathloss between a base station and a mobile station, and
$L_{rsms}$ average pathloss between a relay station and a mobile station.

10. The method of one of claims 6 to 9, comprising:

in case an odd number of receivers ($106_1$-$106_{12}$; MS) is assigned to the transmitter (102; BS), reassigning a receiver ($106_1$-$106_{12}$; MS) to the transmitter (102; BS) that was previously assigned to a relay station ($104_1$-$104_4$; RS) and that has the lowest pathloss to the transmitter (102; BS).

11. The method of one of claims 1 to 10, comprising
separating the available communication bandwidth for communicating between the transmitter (102; BS) and the receivers ($106_1$-$106_{12}$; MS) into $N_f$ frequency bands, wherein

$$N_f = N_u/N_g,$$

with

$N_u$ the number of receivers ($106_1$-$106_{12}$; MS), and
$N_g$ the number of relay station groups (114, 116).

12. The method of claim 11, comprising

assigning the same frequency band to a radio channel between the transmitter (102; BS) and a relay station ($104_1$-$104_2$; RS) of a first group (114) and a radio channel between the transmitter (102; BS) and a relay station ($104_3$-$104_4$; RS) of the second group (116), in case a pathloss between the two relay stations exceeds a predetermined level.

**13.** A computer program with a program code for carrying out the method according to one of claims 1 to 12, when the computer program is running on a computer.

**14.** A transmitter for a wireless communication system, wherein data is communicated in the wireless communication system between a plurality of receivers ($106_1$-$106_{12}$; MS) and the transmitter (102; BS), the wireless communication system comprising a plurality of relay stations ($104_1$-$104_4$; RS), wherein at least one of the plurality of relay stations ($104_1$-$104_4$; RS) has assigned thereto at least one receiver ($106_1$-$106_{12}$; MS), each relay station ($104_1$-$104_4$; RS) relaying data between the transmitter (102; BS) and the assigned receiver ($106_1$-$106_{12}$; MS), **characterized in that** the transmitter (102; BS) is adapted to communicate data between the transmitter (102; BS) and different groups (114, 116) of relay stations ($104_1$-$104_4$; RS) during subsequent communication intervals, wherein each group of relay stations ($104_1$-$104_4$; RS) comprises at least one relay station ($104_1$-$104_4$; RS) and wherein the transmitter is adapted

to communicate data between the transmitter (102) and a first group (114) of relay stations ($104_1$-$104_2$) using a first frequency band and to communicate data between a second group (116) of relay stations ($104_3$-$104_4$) and their assigned receivers ($106_7$-$106_9$) using the first frequency band during a first communication interval ($T_1$), and

to communicate data between the transmitter (102) and a second group (116) of relay stations ($104_3$-$104_4$) using the first frequency band, and to communicate data between the first group (114) of relay stations ($104_1$-$104_2$) and their assigned receivers ($106_1$-$106_4$) using the first frequency band during a second communication interval ($T_2$) .

**15.** The transmitter of claim 14, being adapted to communicate data between the transmitter (102) and a first group of receivers ($106_5$, $106_7$) assigned to the transmitter (102) using a second frequency band during the first communication interval ($T_1$), and to communicate data between the transmitter (102) and a second group of receivers ($106_{11}$, $106_{12}$) assigned to the transmitter (102) using the second frequency band during a second communication interval ($T_2$).

**16.** The transmitter of one of claims 14 to 15, being adapted to separate the available communication bandwidth for communicating between the transmitter (102; BS) and the receivers ($106_1$-$106_{12}$; MS) into $N_f$ frequency bands, wherein

$$N_f = N_u/N_g,$$

with

$N_u$ the number of receivers ($106_1$-$106_{12}$; MS), and
$N_g$ the number of relay station groups (114, 116).

**17.** The transmitter of claim 16, being adapted to assign the same frequency band to a radio channel between the transmitter (102; BS) and a relay station ($104_1$-$104_2$) of the first group (114) and a radio channel between the transmitter (102) and a relay station ($104_3$-$104_4$) of the second group (116) in case a pathloss between the two relay stations exceeds a predetermined level.

**18.** A wireless communication system for communicating data, comprising:

a transmitter (102; BS) in accordance with one of claims 14 to 17;
a plurality of receivers ($106_1$-$106_{12}$; MS);
a plurality of relay stations ($104_1$-$104_4$; RS), wherein at least one of the plurality of relay stations ($104_1$-$104_4$; RS) has assigned thereto at least one receiver ($106_1$-$106_{12}$; MS), each relay station ($104_1$-$104_4$; RS) relaying data between the transmitter (102; BS) and the assigned receiver ($106_1$-$106_{12}$; MS) .

**19.** The system of claim 18, wherein at least one receiver ($106_1$-$106_{12}$; MS) is assigned to one of the plurality of relay stations ($104_1$-$104_4$; RS) based on an average pathloss on the radio channels between the at least one receiver ($106_1$-$106_{12}$; MS) and the plurality of relay stations ($104_1$-$104_4$; RS).

**20.** The system of claim 19, wherein the at least one receiver ($106_1$-$106_{12}$; MS) is assigned to the relay station ($104_1$-$104_4$; RS) having the lowest pathloss to the at least one receiver ($106_1$-$106_{12}$; MS).

**21.** The system of one of claims 18 to 20, comprising a plurality of receivers ($106_5$, $106_6$, $106_{11}$, $106_{12}$) assigned to the transmitter (102; BS), wherein during the subsequent communication intervals ($T_1$, $T_2$), data is further communicated between the transmitter (102; BS) and different groups of receivers ($106_5$, $106_6$, $106_{11}$, $106_{12}$) assigned to the transmitter (102; BS), wherein each group of the receivers ($106_5$, $106_6$, $106_{11}$, $106_{12}$) comprises at least one receiver.

**22.** The system of claim 21, wherein a receiver ($106_5$, $106_6$, $106_{11}$, $106_{12}$; MS) is assigned to the transmitter (102; BS) based on an average pathloss on the radio channels between the relay stations ($104_1$-$104_4$; RS) and the receiver ($106_5$, $106_6$, $106_{11}$, $106_{12}$; MS) and an average pathloss on the radio channel between the receiver ($106_5$, $106_6$, $106_{11}$, $106_{12}$; MS) and the transmitter (102; BS).

**23.** The system of claim 22, wherein a receiver ($106_5$, $106_6$, $106_{11}$, $106_{12}$; MS) is assigned to the transmitter (102; BS) when the pathloss on the radio channel between the transmitter (102; BS) and the receiver ($106_5$, $106_6$, $106_{11}$, $106_{12}$; MS) is the smallest pathloss; when compared to the pathlosses on the radio channels between the relay stations ($104_1$-$104_4$; RS).

**24.** The system of claim 23, wherein a receiver ($106_5$, $106_6$, $106_{11}$, $106_{12}$; MS) is assigned to the transmitter (102; BS) when the signal-to-noise ratio of the radio channel between the receiver and the transmitter (102; BS) is larger than the signal-to-noise ratio on the radio channel between the transmitter (102; BS), a relay station ($104_1$-$104_4$; RS) and the receiver.

**25.** The system of claim 24, wherein a receiver ($106_5$, $106_6$, $106_{11}$, $106_{12}$; MS) is assigned to the transmitter (102; BS ) when

$$\frac{P_{t,bs}}{L_{bsms}(i)\,N_f P_n} > \max_j \frac{\dfrac{P_{t,rs}}{L_{rsms}(j,i)}}{N_f P_n + \dfrac{P_{t,bs}}{L_{bsms}(i)}}$$

with

$P_{t,bs}$ total transmit power of the transmitter (102; BS),
$P_{t,rs}$ total transmit power of a relay station ($104_1$-$104_4$; RS),
$N_f$ number of available frequency bands,
Pn noise power received within each of the available frequency bands,
$L_{bsms}$ average pathloss between a base station and a mobile station, and
$L_{rsms}$ average pathloss between a relay station and a mobile station.

**26.** The system of one of claims 22 to 25, comprising:

in case an odd number of receivers ($106_1$-$106_{12}$: MS) is assigned to the transmitter (102; BS), reassigning a receiver to the transmitter (102; BS) that was previously assigned to a relay station ($104_1$-$104_4$; RS) and that has the lowest pathloss to the transmitter (102; BS).

**Patentansprüche**

**1.** Ein Verfahren zum Kommunizieren von Daten zwischen einer Mehrzahl von Empfängern ($106_1$-$106_{12}$; MS) und einem Sender (102; BS) in einem drahtlosen Kommunikationssystem, wobei das drahtlose Kommunikationssystem eine Mehrzahl von Weiterleitungsstationen ($104_1$-$104_4$; RS) aufweist, wobei zumindest einer der Mehrzahl von Weiterleitungsstationen ($104_1$-$104_4$; RS) zumindest ein Empfänger ($106_1$-$106_{12}$; MS) zugewiesen ist, wobei jede

EP 1 855 492 B1

Weiterleitungsstation ($104_1$-$104_4$; RS) Daten zwischen dem Sender (102; BS) und dem zugewiesenen Empfänger ($106_1$-$106_{12}$; MS) weiterleitet, **gekennzeichnet durch**

während nachfolgender Kommunikationsintervalle ($T_1$, $T_2$; $T_3$, $T_4$), Kommunizieren von Daten zwischen dem Sender (102; BS) und unterschiedlichen Gruppen (114, 116) von Weiterleitungsstationen ($104_1$-$104_4$; RS), wobei jede Gruppe (114, 116) von Weiterleitungsstationen ($104_1$-$104_4$; RS) zumindest eine Weiterleitungsstation ($104_1$-$104_4$; RS) aufweist, wobei,

während eines ersten Kommunikationsintervalls ($T_1$),

Kommunizieren von Daten zwischen dem Sender (102) und einer ersten Gruppe (114) von Weiterleitungsstationen ($104_1$-$104_2$) unter Verwendung eines ersten Frequenzbands, und

Kommunizieren von Daten zwischen einer zweiten Gruppe (116) von Weiterleitungsstationen ($104_3$-$104_4$) und ihren zugewiesenen Empfängern ($106_7$-$106_{10}$) unter Verwendung des ersten Frequenzbands, und

während eines zweiten Kommunikationsintervalls ($T_2$),

Kommunizieren von Daten zwischen dem Sender (102) und der zweiten Gruppe (116) von Weiterleitungsstationen ($104_3$-$104_4$) unter Verwendung des ersten Frequenzbands, und

Kommunizieren von Daten zwischen der ersten Gruppe (114) von Weiterleitungsstationen ($104_1$-$104_2$) und ihren zugewiesenen Empfängern ($106_7$-$106_{10}$) unter Verwendung des ersten Frequenzbands.

2. Das Verfahren gemäß Anspruch 1, das ferner folgende Schritte aufweist:

Zuordnen zumindest eines Empfängers ($106_1$-$106_{12}$; MS) zu einer der Mehrzahl von Weiterleitungsstationen ($104_1$-$104_4$; RS); und

Zuweisen eines Kommunikationsbetriebsmittels zu einer Kommunikationsverknüpfung zwischen dem Sender (102; BS), einer Weiterleitungsstation ($104_1$-$104_4$; RS) und einem Empfänger ($106_1$-$106_{12}$; MS), der der Weiterleitungsstation ($104_1$-$104_4$; RS) zugewiesen ist.

3. Das Verfahren gemäß Anspruch 2, bei dem der zumindest eine Empfänger ($106_1$-$106_{12}$; MS) der Weiterleitungsstation ($104_1$-$104_4$; RS) zugewiesen ist, die die niedrigste Streckendämpfung zu dem zumindest einem Empfänger ($106_1$-$106_{12}$; MS) aufweist.

4. Das Verfahren gemäß einem der Ansprüche 1 bis 3, das ferner folgende Schritte aufweist:

Zuordnen einer Mehrzahl der Empfänger ($106_5$, $106_6$, $106_{11}$, $106_{12}$; MS) zu dem Sender (102; BS), wobei während der nachfolgenden Kommunikationsintervalle ($T_1$, $T_2$) Daten unter Verwendung eines zweiten Frequenzbands weiter zwischen dem Sender (102) und anderen Gruppen von Empfängern ($106_5$, $106_6$, $106_{11}$, $106_{12}$), die dem Sender (102; BS) zugewiesen sind, kommuniziert werden, wobei jede Gruppe von Empfängern zumindest einen Empfänger aufweist.

5. Das Verfahren gemäß Anspruch 4, bei dem
während des ersten Kommunikationsintervalls ($T_1$) unter Verwendung des zweiten Frequenzbands Daten zwischen dem Sender (102) und einer ersten Gruppe von Empfängern ($106_5$, $106_6$) kommuniziert werden, und
während des zweiten Kommunikationsintervalls ($T_2$) unter Verwendung des zweiten Frequenzbands Daten zwischen dem Sender (102; BS) und einer zweiten Gruppe von Empfängern ($106_{11}$, $106_{12}$) kommuniziert werden.

6. Das Verfahren gemäß Anspruch 4 oder 5, bei dem ein Empfänger ($106_5$, $106_6$, $106_{11}$, $106_{12}$; MS) dem Sender (102; BS) basierend auf einer durchschnittlichen Streckendämpfung auf den Funkkanälen zwischen den Weiterleitungsstationen ($104_1$-$104_4$; RS) und dem Empfänger ($106_1$-$106_{12}$; MS) und einer durchschnittlichen Streckendämpfung auf dem Funkkanal zwischen dem Empfänger ($106_5$, $106_6$, $106_{11}$, $106_{12}$; MS) und dem Sender (102; BS) zugewiesen wird.

7. Das Verfahren gemäß Anspruch 6, bei dem ein Empfänger ($106_5$, $106_6$, $106_{11}$, $106_{12}$; MS) dem Sender (102; BS) zugewiesen wird, wenn die Streckendämpfung auf dem Funkkanal zwischen dem Sender (102; BS) und dem Empfänger ($106_5$, $106_6$, $106_{11}$, $106_{12}$; MS) verglichen mit den Streckendämpfungen auf den Funkkanälen zwischen den Weiterleitungsstationen ($104_1$-$104_4$; RS) und dem Empfänger ($106_5$, $106_6$, $106_{11}$, $106_{12}$; MS) die kleinste Streckendämpfung ist.

15

**8.** Das Verfahren gemäß Anspruch 7, bei dem ein Empfänger ($106_5$, $106_6$, $106_{11}$, $106_{12}$; MS) dem Sender (102; BS) zugewiesen wird, wenn das Signal/Rausch-Verhältnis des Funkkanals zwischen dem Empfänger ($106_5$, $106_6$, $106_{11}$, $106_{12}$; MS) und dem Sender (102; BS) größer als das Signal/Rausch-Verhältnis auf dem Funkkanal zwischen dem Sender (102; BS), einer Weiterleitungsstation ($104_1$-$104_4$; RS) und dem Empfänger ($106_5$, $106_6$, $106_{11}$, $106_{12}$; MS) ist.

**9.** Das Verfahren gemäß Anspruch 8, bei dem ein Empfänger ($106_5$, $106_6$, $106_{11}$, $106_{12}$; MS) dem Sender (102; BS) zugewiesen wird, wenn

$$\frac{P_{t,bs}}{L_{bsms}(i)N_f P_n} > \max_j \frac{\dfrac{P_{t,rs}}{L_{rsms}(j,i)}}{N_f P_n + \dfrac{P_{t,bs}}{L_{bsms}(i)}}$$

mit

$P_{t,bs}$ Gesamtsendeleistung des Senders (102; BS),
$P_{t,rs}$ Gesamtsendeleistung einer Weiterleitungsstation ($104_1$-$104_4$; RS),
$N_f$ Anzahl verfügbarer Frequenzbänder,
$P_n$ Rauschleistung, die in jedem der verfügbaren Frequenzbänder empfangen wird,
$L_{bsms}$ durchschnittliche Streckendämpfung zwischen einer Basisstation und einer Mobilstation, und
$L_{rsms}$ durchschnittliche Streckendämpfung zwischen einer Weiterleitungsstation und einer Mobilstation.

**10.** Das Verfahren gemäß einem der Ansprüche 6 bis 9, das folgenden Schritt aufweist:

in dem Fall, dass eine ungerade Anzahl von Empfängern ($106_1$-$106_{12}$; MS) dem Sender (102; BS) zugewiesen ist, Neuzuweisen eines Empfängers ($106_1$-$106_{12}$; MS) zu dem Sender (102; BS), der vorher einer Weiterleitungsstation ($104_1$-$104_4$; RS) zugewiesen war und die niedrigste Streckendämpfung zu dem Sender (102; BS) aufweist.

**11.** Das Verfahren gemäß einem der Ansprüche 1 bis 10, das folgenden Schritt aufweist:

Trennen der verfügbaren Kommunikationsbandbreite zum Kommunizieren zwischen dem Sender (102; BS) und den Empfängern ($106_1$-$106_{12}$; MS) in $N_f$ Frequenzbänder, wobei

$$N_f = N_u/N_g,$$

mit

$N_u$ die Anzahl von Empfängern ($106_1$-$106_{12}$; MS), und
$N_g$ die Anzahl von Weiterleitungsstationsgruppen (114, 116).

**12.** Das Verfahren gemäß Anspruch 11, das folgenden Schritt aufweist:

Zuweisen desselben Frequenzbands einem Funkkanal zwischen dem Sender (102; BS) und einer Weiterleitungsstation ($104_1$-$104_2$; RS) einer ersten Gruppe (114) und einem Funkkanal zwischen dem Sender (102; BS) und einer Weiterleitungsstation ($104_3$-$104_4$; RS) der zweiten Gruppe (116), in dem Fall, dass eine Streckendämpfung zwischen den zwei Weiterleitungsstationen einen vorbestimmten Pegel übersteigt.

**13.** Ein Computerprogramm mit einem Programmcode zum Ausführen des Verfahrens gemäß einem der Ansprüche 1 bis 12, wenn das Computerprogramm auf einem Computer abläuft.

**14.** Ein Sender für ein drahtloses Kommunikationssystem, bei dem Daten in dem drahtlosen Kommunikationssystem zwischen einer Mehrzahl von Empfängern ($106_1$-$106_{12}$; MS) und dem Sender (102; BS) kommuniziert werden, wobei das drahtlose Kommunikationssystem eine Mehrzahl von Weiterleitungsstationen ($104_1$-$104_4$; RS) aufweist, wobei zumindest einer der Mehrzahl von Weiterleitungsstationen ($104_1$-$104_4$; RS) zumindest ein Empfänger ($106_1$-$106_{12}$; MS) zugewiesen ist, wobei jede Weiterleitungsstation ($104_1$-$104_4$; RS) Daten zwischen dem Sender (102; BS) und dem zugewiesenen Empfänger ($106_1$-$106_{12}$; MS) weiterleitet, **gekennzeichnet dadurch, dass** der Sender (102; BS) angepasst ist, um Daten zwischen dem Sender (102; BS) und unterschiedlichen Gruppen (114, 116) von Weiterleitungsstationen ($104_1$ - $104_4$; RS) während nachfolgender Kommunikationsintervalle zu kommunizieren, wobei jede Gruppe von Weiterleitungsstationen ($104_1$ - $104_4$; RS) zumindest eine Weiterleitungsstation ($104_1$ - $104_4$; RS) aufweist, und wobei der Sender angepasst ist zum Kommunizieren von Daten zwischen dem Sender (102) und einer ersten Gruppe (114) von Weiterleitungsstationen ($104_1$-$104_2$) unter Verwendung eines ersten Frequenzbands, und zum Kommunizieren von Daten zwischen einer zweiten Gruppe (116) von Weiterleitungsstationen ($104_3$-$104_4$) und ihren zugewiesenen Empfängern ($106_7$-$106_{10}$) unter Verwendung des ersten Frequenzbands während eines ersten Kommunikationsintervalls ($T_1$), und zum Kommunizieren von Daten zwischen dem Sender (102) und der zweiten Gruppe (116) von Weiterleitungsstationen ($104_3$-$104_4$) unter Verwendung des ersten Frequenzbands und zum Kommunizieren von Daten zwischen der ersten Gruppe (114) von Weiterleitungsstationen ($104_1$-$104_2$) und ihren zugewiesenen Empfängern ($106_1$-$106_4$) unter Verwendung des ersten Frequenzbands während eines zweiten Kommunikationsintervalls ($T_2$).

**15.** Der Sender gemäß Anspruch 14, der angepasst ist zum Kommunizieren von Daten zwischen dem Sender (102) und einer ersten Gruppe von Empfängern ($106_5$, $106_7$), die dem Sender (102) zugewiesen sind, unter Verwendung eines zweiten Frequenzbandes während des ersten Kommunikationsintervalls ($T_1$), und zum Kommunizieren von Daten zwischen dem Sender (102) und einer zweiten Gruppe von Empfängern ($106_{11}$, $106_{12}$), die dem Sender (102) zugewiesen sind, unter Verwendung des zweiten Frequenzbandes während eines zweiten Kommunikationsintervalls ($T_2$).

**16.** Der Sender gemäß einem der Ansprüche 14 bis 15, der angepasst ist, um die verfügbare Kommunikationsbandbreite zum Kommunizieren zwischen dem Sender (102; BS) und den Empfängern ($106_1$-$106_{12}$; MS) in $N_f$ Frequenzbänder zu trennen, wobei

$$N_f = N_u / N_g,$$

mit

$N_u$ die Anzahl von Empfängern ($106_1$-$106_{12}$; MS), und
$N_g$ die Anzahl von Weiterleitungsstationsgruppen (114, 116).

**17.** Der Sender gemäß Anspruch 16, der angepasst ist, um dasselbe Frequenzband einem Funkkanal zwischen dem Sender (102; BS) und einer Weiterleitungsstation ($104_1$-$104_2$; RS) der ersten Gruppe (114) und einem Funkkanal zwischen dem Sender (102) und einer Weiterleitungsstation ($104_3$-$104_4$; RS) der zweiten Gruppe (116) zuzuweisen, in dem Fall, dass eine Streckendämpfung zwischen den zwei Weiterleitungsstationen einen vorbestimmten Pegel übersteigt.

**18.** Ein drahtloses Kommunikationssystem zum Kommunizieren von Daten, das folgende Merkmale aufweist:

einen Sender (102; BS) gemäß einem der Ansprüche 14 bis 17;
eine Mehrzahl von Empfängern ($106_1$-$106_{12}$; MS);
eine Mehrzahl von Weiterleitungsstationen ($104_1$-$104_4$; RS), wobei zumindest einer der Mehrzahl von Weiterleitungsstationen ($104_1$-$104_4$; RS) zumindest ein Empfänger ($106_1$-$106_{12}$; MS) zugewiesen ist, wobei jede Weiterleitungsstation ($104_1$-$104_4$; RS) Daten zwischen dem Sender (102; BS) und dem zugewiesenen Empfänger ($106_1$-$106_{12}$; MS) weiterleitet.

**19.** Das System gemäß Anspruch 18, bei dem zumindest ein Empfänger ($106_1$-$106_{12}$; MS) einer der Mehrzahl von Weiterleitungsstationen ($104_1$-$104_4$; RS) basierend auf einer durchschnittlichen Streckendämpfung auf den Funkkanälen zwischen dem zumindest einem Empfänger ($106_1$-$106_{12}$; MS) und der Mehrzahl von Weiterleitungsstationen ($104_1$-$104_4$; RS) zugewiesen ist.

20. Das System gemäß Anspruch 19, bei dem der zumindest eine Empfänger ($106_1$-$106_{12}$; MS) der Weiterleitungsstation ($104_1$-$104_4$; RS) zugewiesen ist, die die niedrigste Streckendämpfung zu dem zumindest einen Empfänger ($106_1$-$106_{12}$; MS) aufweist.

21. Das System gemäß einem der Ansprüche 18 bis 20, das eine Mehrzahl von Empfängern ($106_5$, $106_6$, $106_{11}$, $106_{12}$) aufweist, die dem Sender (102; BS) zugewiesen sind, wobei während der nachfolgenden Kommunikationsintervalle ($T_1$, $T_2$) Daten weiter zwischen dem Sender (102; BS) und unterschiedlichen Gruppen von Empfängern ($106_5$, $106_6$, $106_{11}$, $106_{12}$), die dem Sender (102; BS) zugewiesen sind, kommuniziert werden, wobei jede Gruppe der Empfänger ($106_5$, $106_6$, $106_{11}$, $106_{12}$) zumindest einen Empfänger aufweist.

22. Das System gemäß Anspruch 21, bei dem ein Empfänger ($106_5$, $106_6$, $106_{11}$, $106_{12}$; MS) dem Sender (102; BS) basierend auf einer durchschnittlichen Streckendämpfung auf den Funkkanälen zwischen den Weiterleitungsstationen ($104_1$-$104_4$; RS) und dem Empfänger ($106_5$, $106_6$, $106_{11}$, $106_{12}$; MS) und einer durchschnittlichen Streckendämpfung auf dem Funkkanal zwischen dem Empfänger ($106_5$, $106_6$, $106_{11}$, $106_{12}$; MS) und dem Sender (102; BS) zugewiesen wird.

23. Das System gemäß Anspruch 22, bei dem ein Empfänger ($106_5$, $106_6$, $106_{11}$, $106_{12}$; MS) dem Sender (102; BS) zugewiesen wird, wenn die Streckendämpfung auf dem Funkkanal zwischen dem Sender (102; BS) und dem Empfänger ($106_5$, $106_6$, $106_{11}$, $106_{12}$; MS) verglichen mit den Streckendämpfungen auf den Funkkanälen zwischen den Weiterleitungsstationen ($104_1$-$104_4$; RS) die kleinste Streckendämpfung ist.

24. Das System gemäß Anspruch 23, bei dem ein Empfänger ($106_5$, $106_6$, $106_{11}$, $106_{12}$; MS) dem Sender (102; BS) zugewiesen wird, wenn das Signal/Rausch-Verhältnis des Funkkanals zwischen dem Empfänger und dem Sender (102; BS) größer als das Signal/Rausch-Verhältnis auf dem Funkkanal zwischen dem Sender (102; BS), einer Weiterleitungsstation ($104_1$-$104_4$; RS) und dem Empfänger ist.

25. Das System gemäß Anspruch 24, bei dem ein Empfänger ($106_5$, $106_6$, $106_{11}$, $106_{12}$; MS) dem Sender (102; BS) zugewiesen wird, wenn

$$\frac{P_{t,bs}}{L_{bsms}(i)N_f P_n} > \max_j \frac{\frac{P_{t,rs}}{L_{rsms}(j,i)}}{N_f P_n + \frac{P_{t,bs}}{L_{bsms}(i)}}$$

mit

$P_{t,bs}$ Gesamtsendeleistung des Senders (102; BS),
$P_{t,rs}$ Gesamtsendeleistung einer Weiterleitungsstation ($104_1$-$104_4$; RS),
$N_f$ Anzahl verfügbarer Frequenzbänder,
$P_n$ Rauschleistung, die in jedem der verfügbaren Frequenzbänder empfangen wird,
$L_{bsms}$ durchschnittliche Streckendämpfung zwischen einer Basisstation und einer Mobilstation, und
$L_{rsms}$ durchschnittliche Streckendämpfung zwischen einer Weiterleitungsstation und einer Mobilstation.

26. Das System gemäß einem der Ansprüche 22 bis 25, das folgendes Merkmal aufweist:

für den Fall, dass eine ungerade Anzahl von Empfängern ($106_1$-$106_{12}$; MS) dem Sender (102; BS) zugewiesen ist, Neuzuweisen eines Empfängers zu dem Sender (102; BS), der vorher einer Weiterleitungsstation ($104_1$-$104_4$; RS) zugewiesen war und die niedrigste Streckendämpfung zu dem Sender (102; BS) aufweist.

**Revendications**

1. Procédé pour communiquer des données entre une pluralité de récepteurs ($106_1$ à $106_{12}$; MS) et un émetteur (102; BS) dans un système de communication sans fil, le système de communication sans fil comprenant une pluralité de stations relais ($104_1$ à $104_4$; RS), dans lequel au moins l'une parmi la pluralité de stations relais ($104_1$ à $104_4$; RS) présente, lui attribué, au moins un récepteur ($106_1$ à $106_{12}$; MS), chaque station relais ($104_1$ à $104_4$; RS) relayant des données entre l'émetteur (102; BS) et le récepteur attribué ($106_1$ à $106_{12}$; MS), **caractérisé par** pendant des intervalles de communication suivants ($T_1$, $T_2$; $T_3$, $T_4$), communiquer des données entre l'émetteur (102; BS) et différents groupes (114, 116) de stations relais ($104_1$ à $104_4$; RS), où chaque groupe (114, 116) de stations relais ($104_1$ à $104_4$; RS) comprend au moins une station relais ($104_1$ à $104_4$; RS), dans lequel pendant un premier intervalle de communication ($T_1$)

communiquer des données entre l'émetteur (102) et un premier groupe (114) de stations relais ($104_1$ à $104_2$) à l'aide d'une première bande de fréquences, et
communiquer des données entre un deuxième groupe (116) de stations relais ($104_3$ à $104_4$) et leurs récepteurs attribués ($106_7$ à $106_{10}$) à l'aide de la première bande de fréquences; et

pendant un deuxième intervalle de communication ($T_2$)

communiquer des données entre l'émetteur (102) et le deuxième groupe (116) de stations relais ($104_3$ à $104_4$) à l'aide de la première bande de fréquences, et
communiquer des données entre le premier groupe (114) de stations relais ($104_1$ à $104_2$) et leurs récepteurs attribués ($106_7$ à $106_{10}$) à l'aide de la première bande de fréquences.

2. Procédé selon la revendication 1, comprenant par ailleurs:

associer au moins un récepteur ($106_1$ à $106_{12}$; MS) à l'une parmi la pluralité de stations relais ($104_1$ à $104_4$; RS); et
attribuer une ressource de communication à une liaison de communication entre l'émetteur (102; BS), une station relais ($104_1$ à $104_4$; RS) et un récepteur ($106_1$ à $106_{12}$; MS) attribuée à la station relais ($104_1$ à $104_4$; RS).

3. Procédé selon la revendication 2, dans lequel l'au moins un récepteur ($106_1$ à $106_{12}$; MS) est attribué à la station relais ($104_1$ à $104_4$; RS) présentant la perte de trajet la plus faible vers l'au moins un récepteur ($106_1$ à $106_{12}$; MS).

4. Procédé selon l'une des revendications 1 à 3, comprenant par ailleurs:

associer une pluralité de récepteurs ($106_5$, $106_6$, $106_{11}$, $106_{12}$; MS) à l'émetteur (102; BS), où, pendant les intervalles de communication suivants ($T_1$, $T_2$), des données sont par ailleurs communiquées entre l'émetteur (102) et différents groupes de récepteurs ($106_5$, $106_6$, $106_{11}$, $106_{12}$) attribués à l'émetteur (102; BS) à l'aide d'une deuxième bande de fréquences, où chaque groupe de récepteurs comprend au moins un récepteur.

5. Procédé selon la revendication 4, dans lequel
pendant le premier intervalle de communication ($T_1$), des données sont communiquées entre l'émetteur (102) et un premier groupe de récepteurs ($106_5$, $106_6$) à l'aide de la deuxième bande de fréquences, et
pendant le deuxième intervalle de communication ($T_2$), des données sont communiquées entre l'émetteur (102; BS) et un groupe de deuxièmes récepteurs ($106_{11}$, $106_{12}$) à l'aide de la deuxième bande de fréquences.

6. Procédé selon la revendication 4 ou 5, dans lequel un récepteur ($106_5$, $106_6$, $106_{11}$, $106_{12}$; MS) est attribué à l'émetteur (102; BS) sur base d'une perte de trajet sur les canaux de radiocommunication entre les stations relais ($104_1$ à $104_4$; RS) et le récepteur ($106_1$ à $106_{12}$; MS) et d'une perte de trajet moyenne sur le canal de radiocommunication entre le récepteur ($106_5$, $106_6$, $106_{11}$, $106_{12}$; MS) et l'émetteur (102; BS).

7. Procédé selon la revendication 6, dans lequel un récepteur ($106_5$, $106_6$, $106_{11}$, $106_{12}$; MS) est attribué à l'émetteur (102; BS) lorsque la perte de trajet sur le canal de radiocommunication entre l'émetteur (102; BS) et le récepteur ($106_5$, $106_6$, $106_{11}$, $106_{12}$; MS) est la perte de trajet la plus petite, comparé aux pertes de trajet sur les canaux de radiocommunication entre les stations relais ($104_1$ à $104_4$; RS) et le récepteur ($106_5$, $106_6$, $106_{11}$, $106_{12}$; MS).

8. Procédé selon la revendication 7, dans lequel un récepteur ($106_5$, $106_6$, $106_{11}$, $106_{12}$; MS) est attribué à l'émetteur (102; BS) lorsque le rapport signal / bruit du canal de radiocommunication entre le récepteur ($106_5$, $106_6$, $106_{11}$,

$106_{12}$; MS) et l'émetteur (102; BS) est supérieur au rapport signal / bruit sur le canal de radiocommunication entre l'émetteur (102; BS), une station relais ($104_1$ à $104_4$; RS) et le récepteur ($106_5$, $106_6$, $106_{11}$, $106_{12}$; MS).

9. Procédé selon la revendication 8, dans lequel un récepteur ($106_5$, $106_6$, $106_{11}$, $106_{12}$; MS) est attribuée à l'émetteur (102; BS) lorsque

$$\frac{P_{t,bs}}{L_{bsms}(i)N_f P_n} > \max_j \frac{\dfrac{P_{t,rs}}{L_{rsms}(j,i)}}{N_f P_n + \dfrac{P_{t,bs}}{L_{bsms}(i)}}$$

avec

$P_{t,bs}$ puissance de transmission totale de l'émetteur (102; BS),
$P_{t,rs}$ puissance de transmission totale d'une station relais ($104_1$ à $104_4$; RS),
$N_f$ nombre de bandes de fréquences disponibles,
Pn puissance de bruit reçue dans chacune des bandes de fréquences disponibles,
$L_{bsms}$ perte de trajet moyenne entre une station de base et une station mobile, et
$L_{rsms}$ perte de trajet moyenne entre une station relais et une station mobile.

10. Procédé selon l'une des revendications 6 à 9, comprenant:

au cas où un nombre impair de récepteurs ($106_1$ à $106_{12}$; MS) est attribué à l'émetteur (102; BS), attribuer à nouveau un récepteur ($106_1$ à $106_{12}$; MS) à l'émetteur (102; BS) qui a été attribué auparavant à une station relais ($104_1$ à $104_4$; RS) et qui a la perte de trajet la plus faible vers l'émetteur (102; BS).

11. Procédé selon l'une des revendications 1 à 10, comprenant
séparer la largeur de bande de communication disponible pour communiquer entre l'émetteur (102; BS) et les récepteurs ($106_1$ à $106_{12}$; MS) en $N_f$ bandes de fréquences, où

$$N_f = N_u / N_g,$$

avec

$N_u$ le nombre de récepteurs ($106_1$ à $106_{12}$; MS), et
$N_g$ le nombre de groupes de stations relais (114, 116).

12. Procédé selon la revendication 11, comprenant
attribuer la même bande de fréquences à un canal de radiocommunication entre l'émetteur (102; BS) et une station relais ($104_1$ à $104_2$; RS) d'un premier groupe (114) et un canal de radiocommunication entre l'émetteur (102; BS) et une station relais ($104_3$ à $104_4$; RS) du deuxième groupe (116), au cas où une perte de trajet entre les deux stations relais excède un niveau prédéterminé.

13. Programme d'ordinateur avec un code de programme pour réaliser le procédé selon l'une des revendications 1 à 12 lorsque le programme d'ordinateur est exécuté sur un ordinateur.

14. Emetteur pour un système de communication sans fil, dans lequel des données sont communiquées dans le système de communication sans fil entre une pluralité de récepteurs ($106_1$ à $106_{12}$; MS) et l'émetteur (102; BS), le système de communication sans fil comprenant une pluralité de stations relais ($104_1$ à $104_4$; RS), dans lequel au moins l'une parmi la pluralité de stations relais ($104_1$ à $104_4$; RS) présente, lui attribué, au moins un récepteur ($106_1$ à $106_{12}$; MS), chaque station relais ($104_1$ à $104_4$; RS) relayant des données entre l'émetteur (102; BS) et le récepteur attribué ($106_1$ à $106_{12}$; MS), **caractérisé par le fait que**

l'émetteur (102; BS) est adapté pour communiquer des données entre l'émetteur (102; BS) et différents groupes (114, 116) de stations relais ($104_1$ à $104_4$; RS) pendant des intervalles de communication suivants, où chaque groupe de stations relais ($104_1$ à $104_4$; RS) comprend au moins une station relais ($104_1$ à $104_4$; RS) et où l'émetteur est adapté

pour communiquer des données entre l'émetteur (102) et un premier groupe (114) de stations relais ($104_1$ à $104_2$) à l'aide d'une première bande de fréquences et pour communiquer des données entre un deuxième groupe (116) de stations relais ($104_3$ à $104_4$) et leurs récepteurs attribués ($106_7$ à $106_9$) à l'aide de la première bande de fréquences pendant un premier intervalle de communication ($T_1$), et

pour communiquer des données entre l'émetteur (102) et un deuxième groupe (116) de stations relais ($104_3$ à $104_4$) à l'aide de la première bande de fréquences, et pour communiquer des données entre le premier groupe (114) de stations relais ($104_1$ à $104_2$) et leurs récepteurs attribués ($106_1$ à $106_4$) à l'aide de la première bande de fréquences pendant un deuxième intervalle de communication ($T_2$).

15. Emetteur selon la revendication 14, adapté pour

communiquer des données entre l'émetteur (102) et un premier groupe de récepteurs ($106_5$, $106_7$) attribués à l'émetteur (102) à l'aide d'une deuxième bande de fréquences pendant le premier intervalle de communication ($T_1$), et communiquer des données entre l'émetteur (102) et un deuxième groupe de récepteurs ($106_{11}$, $106_{12}$) attribués à l'émetteur (102) à l'aide de la deuxième bande de fréquence pendant un deuxième intervalle de communication ($T_2$).

16. Emetteur selon l'une des revendications 14 à 15, adapté pour séparer la largeur de bande de communication disponible pour communiquer entre l'émetteur (102; BS) et les récepteurs ($106_1$ à $106_{12}$; MS) en $N_f$ bandes de fréquences, où

$$N_f = N_u / N_g,$$

avec

$N_u$ le nombre de récepteurs ($106_1$ à $106_{12}$; MS), et
$N_g$ le nombre de groupes de stations relais (114, 116).

17. Emetteur selon la revendication 16, adapté pour attribuer la même bande de fréquences à un canal de radiocommunication entre l'émetteur (102; BS) et une station relais ($104_1$ à $104_2$) du premier groupe (114) et un canal de radiocommunication entre l'émetteur (102) et une station relais ($104_3$ à $104_4$) du deuxième groupe (116) au cas où une perte de trajet entre les deux stations relais excède un niveau prédéterminé.

18. Système de communication sans fil pour communiquer des données, comprenant:

un émetteur (102; BS) selon l'une des revendications 14 à 17;
une pluralité de récepteurs ($106_1$ à $106_{12}$; MS);
une pluralité de stations relais ($104_1$ à $104_4$; RS), où au moins l'une de la pluralité de stations relais ($104_1$ à $104_4$; RS) présente, lui associé, au moins un récepteur ($106_1$ à $106_{12}$; MS), chaque station relais ($104_1$ à $104_4$; RS) relayant des données entre l'émetteur (102; BS) et le récepteur attribué ($106_1$ à $106_{12}$; MS).

19. Système selon la revendication 18, dans lequel au moins un récepteur ($106_1$ à $106_{12}$; MS) est attribué à l'une parmi la pluralité de stations relais ($104_1$ à $104_4$; RS) sur base d'une perte de trajet moyenne sur les canaux de radiocommunication entre l'au moins un récepteur ($106_1$ à $106_{12}$; MS) et la pluralité de stations relais ($104_1$ à $104_4$; RS).

20. Système selon la revendication 19, dans lequel l'au moins un récepteur ($106_1$ à $106_{12}$; MS) est attribué à la station relais ($104_1$ à $104_4$; RS) présentant la perte de trajet la plus basse vers l'au moins un récepteur ($106_1$ à $106_{12}$; MS).

21. Système selon l'une des revendications 18 à 20, comprenant une pluralité de récepteurs ($106_5$, $106_6$, $106_{11}$, $106_{12}$) attribués à l'émetteur (102; BS), dans lequel pendant les intervalles de communication suivants ($T_1$, $T_2$), des données

sont par ailleurs communiquées entre l'émetteur (102; BS) et différents groupes de récepteurs ($106_5$, $106_6$, $106_{11}$, $106_{12}$) attribués à l'émetteur (102; BS), où chaque groupe de récepteurs ($106_5$, $106_6$, $106_{11}$, $106_{12}$) comprend au moins un récepteur.

**22.** Système selon la revendication 21, dans lequel un récepteur ($106_5$, $106_6$, $106_{11}$, $106_{12}$; MS) est attribué à l'émetteur (102; BS) sur base d'une perte de trajet moyenne sur les canaux de radiocommunication entre les stations relais ($104_1$ à $104_4$; RS) et le récepteur ($106_5$, $106_6$, $106_{11}$, $106_{12}$; MS) et d'une perte de trajet moyenne sur le canal de radiocommunication entre le récepteur ($106_5$, $106_6$, $106_{11}$, $106_{12}$; MS) et l'émetteur (102; BS).

**23.** Système selon la revendication 22, dans lequel un récepteur ($106_5$, $106_6$, $106_{11}$, $106_{12}$; MS) est attribué à l'émetteur (102; BS) lorsque la perte de trajet sur le canal de radiocommunication entre l'émetteur (102; BS) et le récepteur ($106_5$, $106_6$, $106_{11}$, $106_{12}$; MS) est la perte de trajet la plus petite, comparé aux pertes de trajet sur les canaux de radiocommunication entre les stations relais ($104_1$ à $104_4$; RS).

**24.** Système selon la revendication 23, dans lequel un récepteur ($106_5$, $106_6$, $106_{11}$, $106_{12}$; MS) est attribué à l'émetteur (102; BS) lorsque le rapport signal / bruit du canal de radiocommunication entre le récepteur et l'émetteur (102; BS) est supérieur au rapport signal / bruit sur le canal de radiocommunication entre l'émetteur (102; BS), une station relais ($104_1$ à $104_4$; RS) et le récepteur.

**25.** Système selon la revendication 24, dans lequel un récepteur ($106_5$, $106_6$, $106_{11}$, $106_{12}$; MS) est attribué à l'émetteur (102; BS) lorsque

$$\frac{P_{t,bs}}{L_{bsms}(i)N_f P_n} > \max_j \frac{\dfrac{P_{t,rs}}{L_{rsms}(j,i)}}{N_f P_n + \dfrac{P_{t,bs}}{L_{bsms}(i)}}$$

avec

$P_{t,bs}$ puissance de transmission totale de l'émetteur (102; BS),
$P_{t,rs}$ puissance de transmission totale d'une station relais ($104_1$ à $104_4$; RS),
$N_f$ nombre de bandes de fréquences disponibles,
Pn puissance de bruit reçue dans chacune des bandes de fréquences disponibles,
$L_{bsms}$ perte de trajet moyenne entre une station de base et une station mobile, et
$L_{rsms}$ perte de trajet moyenne entre une station relais et une station mobile.

**26.** Système selon l'une des revendications 22 à 25, comprenant :

au cas où un nombre impair de récepteurs ($106_1$ à $106_{12}$; MS) est attribué à l'émetteur (102; BS), attribuer à nouveau un récepteur à l'émetteur (102; BS) qui a été attribué auparavant à une station relais ($104_1$ à $104_4$; RS) et qui a la perte de trajet la plus faible vers l'émetteur (102; BS).

# FIG 1

# FIG 2

Frequency

Pairwise Reuse of resources in each Phase

| BS ->MS$_{d1}$ | BS ->MS$_{d2}$ | BS ->MS$_{d3}$ | BS -> MS$_{d4}$ |

| BS ->RSG$_1$ | BS->RSG$_2$ | BS ->RSG$_3$ | BS ->RSG$_4$ |
| RSG$_2$-> MS$_{r2}$ | RSG$_1$ -> MS$_{r1}$ | RSG$_4$ -> MS$_{r4}$ | RSG$_3$ -> MS$_{r3}$ |

| BS -> MS$_{dN-1}$ | BS -> MS$_{dN}$ |

| BS ->RSG$_{N-1}$ | BS ->RSG$_N$ |
| RSG$_2$ -> MS$_{rN}$ | RSG$_1$ -> MS$_{rN-1}$ |

Time

$T_1$   $T_2$   $T_3$   $T_4$

$T_{12}$   $T_{34}$

N Phases

BS   Base station
RS   Relay station
MS   Mobile station
RSG$_x$   RS group x

EP 1 855 492 B1

# FIG 3

Assignment of a mobile station to the node (base station or relay station) that has the lowest pathloss to the mobile station — S1a

S1

Rearrangement of the mobile stations — S1b

Assignment of frequency bands to corresponding links — S2

# FIG 4

# FIG 5a

# FIG 5b

# FIG 6a

# FIG 6b

| | Transmission between BS and RS | Transmission between RS and MS | |
|---|---|---|---|
| ... | | | ... |

$$\overset{\longleftarrow T_1 \longrightarrow}{\qquad} \overset{\longleftarrow T_2 \longrightarrow}{\qquad} t$$

# FIG 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1501216 A1

### Non-patent literature cited in the description

- **WERNER MOHR ; RAINER LÜDER ; KARL-HEINZ MÖHRMANN.** Data Rate Estimates, Range Calculations and Spectrum Demand for New Elements of Systems Beyond IMT-2000. *5th International Symposium on Wireless Personal Multimedia Communications,* October 2002, vol. 1, 37-46
- **J. NICHOLAS LANEMAN ; DAVID N.C. TSE ; GREGORY W. WORNELL.** Cooperative Diversity in Wireless Networks: Efficient Protocols and Outage Behavior. *IEEE Transactions on Information Theory, accepted for publication. User cooperation schemes that aim on gaining diversity were proposed and analyzed in Andrew Sendonaris, Elza Erkip, and Behnaam Aazhang, "User Cooperation Diversity, Part I and II," IEEE Transactions on Communications,* November 2003, vol. 15, 1927-1948
- **OLGA MUNOZ ; JOSEP VIDAL ; ADRIÁN AGUSTIN.** A Game Theoretic Approach for Cooperative MIMO Schemes with Cellular Reuse of the Relay Slot. *Proc. IEEE International Conference on Acoustics, Speech and Signal Processing, ICASSP,* May 2004
- **MARKUS HERDIN.** MIMO Amplify-and-Forward Relaying in correlated MIMO channels. *Proc. International Conference on Information, Communications and Signal Processing,* December 2005, 796-800
- **H. HU ; H. YANIKOMEROGLU ; D.D. FALCONER ; S. PERIYALWAR.** Range extension without capacity penalty in cellular networks with digital fixed relays. *Proc. IEEE Global Telecommunications Conference,* November 2004
- **O. MUBAREK ; H. YANIKOMEROGLU ; S. PERIYALWAR.** Dynamic frequency hopping in cellular fixed relay networks. *Proc. IEEE Vehicular Technology Conference,* May 2005